# DEMANDE DE BREVET EUROPEEN

(11) **EP 4 481 456 A1**
(43) Date de publication de la demande: **25.12.2024**
(21) Numéro de dépôt: 24179948.5
(22) Date de dépôt: 04.06.2024
(51) Int. Cl.: G02B 6/50, G01D 5/353, G01H 9/00

(54) **PROCÉDÉ ET DISPOSITIF DE LOCALISATION D'UNE FIBRE OPTIQUE**

(30) Priorité: 19.06.2023 FR 2306295
(71) Demandeur: Orange, 92130 Issy-les-Moulineaux (FR)
(72) Inventeur: GREGOIRE, Christian, 92326 CHATILLON CEDEX (FR); PELLEN, Nicolas, 92326 CHATILLON CEDEX (FR)
(74) Mandataire: Cabinet Beau de Loménie

(57) **Abrégé**

La présente invention concerne un procédé et un dispositif de localisation (APP) d'une fibre optique (FBR) enfouie dans un volume. En particulier, le procédé comprend au moins :
- déterminer une position de la fibre optique (POS_FBR) en fonction d'au moins un niveau de détection (DET_LVL) d'une source de rayonnement (SRC) pour au moins une position de la source (POS_SRC) fourni par un dispositif de détection (DXS) connecté à la fibre optique (FBR).

## Description

### Domaine technique

La présente invention se rapporte au domaine de la localisation de réseaux de fibres optiques. Plus particulièrement, la présente invention concerne un procédé et un dispositif de localisation d'une fibre optique, ainsi qu'un système et un programme d'ordinateur associés.

### Technique antérieure

L'invention s'inscrit dans le contexte de la localisation de fibres optiques enterrées, comme par exemple des fibres optiques enfouies dans le sol d'un bâtiment ou d'une rue. En fait, il existe des différences significatives entre les informations de localisation saisies lors de l'installation d'une fibre optique et la position réelle de celle-ci. Ces différences atteignent souvent plusieurs dizaines de centimètres. Or, il est essentiel de pouvoir localiser avec précision une fibre optique enterrée, notamment pour éviter de l'endommager lors de travaux, ou pour ajouter un point de branchement optique, ou encore pour la réparer.

Contrairement à un câble électrique, une fibre optique enfouie dans un sol ne peut être détectée en analysant le champ électromagnétique à la surface du sol. C'est pourquoi une solution connue pour localiser une fibre optique enterrée consiste à insérer une aiguille métallique dans le fourreau contenant la fibre optique, puis à détecter cette aiguille par des moyens électromagnétiques. L'aiguille est alimentée avec une tension électrique à une fréquence donnée, ce qui permet de la localiser à la surface en utilisant un détecteur électromagnétique. Toutefois, cette solution présente un certain nombre d'inconvénients et notamment les suivants.

D'une part, le fourreau de la fibre optique peut être obstrué, ou occupé par d'autres câbles, voire présenter des coudes. Auquel cas, il n'est tout simplement pas possible d'insérer une aiguille métallique dans le fourreau de la fibre optique pour localiser celle-ci. D'autre part, la précision de localisation des solutions existantes n'est pas pleinement satisfaisante. Le bruit électromagnétique provenant de différentes sources, telles que les interférences avec les réseaux électriques à proximité ou le bruit thermique, perturbe les mesures de localisation de l'aiguille métallique et dégrade la précision de localisation de la fibre optique.

Il existe par conséquent un besoin pour une solution permettant de localiser avec précision une fibre optique enterrée, et ce de manière non-invasive (i.e. sans avoir à creuser dans le sol).

### Exposé de l'invention

La présente invention a pour objectif de remédier à tout ou partie des inconvénients de l'art antérieur, notamment ceux exposés ci-dessus.

À cet effet, et selon un aspect de l'invention, il est proposé un procédé de localisation d'une fibre optique enfouie dans un volume, le procédé comprenant au moins :
- déterminer une position de la fibre optique en fonction d'au moins un niveau de détection d'une source de rayonnement pour au moins une position de la source fourni par un dispositif de détection connecté à la fibre optique.

La solution proposée permet de localiser avec précision une fibre optique enfouie dans un volume (e.g. un sol ou un mur), et ce de manière non-invasive.

En particulier, la solution proposée exploite la propriété selon laquelle une fibre optique permet de détecter une onde mécanique ou acoustique se propageant dans le sol. La source de rayonnement (e.g. un haut-parleur, ou un dispositif de percussion, ou un chalumeau) est située à la surface du sol ou au voisinage de cette surface. Elle génère par exemple des vibrations acoustiques ou mécaniques. Ces vibrations se propagent sous la forme d'ondes dans le sol et induisent des déformations (élongations ou compressions) de la fibre optique.

Le dispositif de détection est lui connecté à une extrémité de la fibre optique devant être localisée, et utilise la fibre optique comme capteur pour détecter la source de vibration. Il s'agit notamment d'un dispositif de détection acoustique distribuée ou d'un dispositif de détection de vibration distribuée. Ce dispositif envoie des impulsions lumineuses dans la fibre optique et mesure les caractéristiques de la lumière réfléchie, et permet de mesurer les déformations de la fibre optique induites par les vibrations. En fait, les perturbations acoustiques ou vibratoires induisent des déformations de la fibre optique, ce qui modifie les caractéristiques de la lumière réfléchie (e.g. son amplitude, sa phase).

Le dispositif de détection fournit ainsi un niveau de détection de la source de vibration. Ce niveau de détection est fonction de la distance entre la source et la fibre optique. Plus la source de vibration est proche de la fibre, plus les déformations de la fibre induites par les vibrations sont importantes, et plus le niveau de détection de la source est élevé.

En utilisant le ou les niveaux de détection obtenus pour différentes positions de la source de vibration, la solution proposée permet d'estimer une position d'un point de la fibre optique par rapport à la surface du sol. Elle permet ainsi de localiser le parcours de la fibre dans le sol.

Nous avons décrit ci-dessus le fonctionnement de la solution proposée en référence à une source de vibration. Il convient de noter que la solution proposée fonctionne de manière similaire dans le cas d'une source de chaleur. La source de chaleur provoque une conduction thermique dans le sol, ce qui induit aussi une déformation de la fibre optique et peut être détecté par le dispositif de détection.

Dans des modes de réalisation particuliers, le procédé de localisation peut comporter en outre l'une ou plusieurs des caractéristiques suivantes, prises isolément ou selon toutes les combinaisons techniquement possibles.

Selon un mode de réalisation, un niveau de détection de la source est obtenu pour chacune parmi une pluralité de positions de la source, et la position de la fibre optique est estimée en fonction des niveaux de détection obtenus.

Ce mode de réalisation contribue à localiser de manière précise la fibre optique. La position de la fibre optique est ici estimée en utilisant une pluralité de niveaux de détection de la source respectivement obtenus pour différentes positions de celle-ci. La source peut ainsi être déplacée de proche en proche pour obtenir différents niveaux de détection, et en déduire une position de la fibre optique.

Selon un mode de réalisation, ladite position estimée de la fibre optique correspond à la position de la source pour laquelle le niveau de détection obtenu est maximum parmi plusieurs positions de la source situées dans une zone de recherche.

Selon ce mode de réalisation, la détermination d'une position de la fibre optique est mise en oeuvre dans une zone de recherche donnée, et plusieurs niveaux de détection sont respectivement obtenus pour différentes positions de la source à l'intérieur de cette zone de recherche. La source est, par exemple, déplacée par un utilisateur pour atteindre un niveau de détection maximum, ce qui donne la position estimée de la fibre. Ce mode de réalisation permet ainsi de localiser avec précision la fibre optique, et présente une complexité de mise en oeuvre minime.

Selon un mode de réalisation, le procédé comprend plusieurs déterminations d'une position de la fibre optique respectivement mises en oeuvre pour différentes zones de recherche, une dite position de la fibre optique étant déterminée en fonction d'au moins un niveau de détection obtenu pour au moins une position de la source comprise dans une dite zone de recherche.

Ce mode de réalisation permet de déterminer le parcours de la fibre optique. En effet, plusieurs positions de la fibre optique sont déterminées pour différentes zones de recherche selon ce mode de réalisation. Plusieurs points de localisation de la fibre sont ainsi obtenus, permettant de caractériser le parcours de la fibre dans le sol.

Selon un mode de réalisation, le procédé comprend :
- fournir une carte (e.g. une représentation graphique) représentative d'au moins une position déterminée de la fibre optique.

Ce mode de réalisation est particulièrement avantageux en ce qu'il permet de restituer à un utilisateur la localisation de la fibre optique.

Selon un mode de réalisation, la carte fournie est en outre représentative d'au moins une position théorique (i.e. attendue) de la fibre optique.

Ce mode de réalisation permet à un utilisateur de visualiser l'emplacement de la fibre optique prévu lors de son installation et l'emplacement réel de la fibre optique, et ainsi de constater les différences entre les deux. En effet, la carte fournie représente non seulement les positions déterminées de la fibre mais également les positions théoriques de celle-ci, c'est-à-dire les informations de localisation saisies lors de l'installation de la fibre optique.

Selon un mode de réalisation, la fourniture de la carte comprend au moins une étape parmi les suivantes :
- interpoler des positions déterminées de la fibre optique ; et
- régresser des positions déterminées de la fibre optique.

Il est proposé dans ce mode de réalisation de réaliser une interpolation ou une régression de plusieurs positions déterminées de la fibre optique, ce qui permet avantageusement de générer un tracé de fibre optique. Ce mode de réalisation permet de restituer à un utilisateur le tracé de la fibre optique et lui permet de visualiser le parcours de la fibre.

Selon ce mode de réalisation, l'interpolation ou la régression des positions déterminées de la fibre optique est réalisée en fonction d'un rayon de courbure minimum de la fibre optique.

Ce mode de réalisation est avantageux en ce qu'il permet d'obtenir un tracé fiable de la fibre à partir de quelques positions déterminées de la fibre. Corrélativement, il permet de réduire le nombre nécessaire de positions de la fibre optique pour obtenir un tracé fiable. Pour assurer le bon fonctionnement de la fibre optique, celle-ci est installée en respectant un rayon de courbure minimum (fonction du type de fibre optique). Ce mode de réalisation propose d'utiliser ce rayon de courbure minimum pour générer le tracé de la fibre optique.

Selon un mode de réalisation, une détermination d'une position de la fibre optique comprend : obtenir une profondeur de la fibre optique par rapport à une surface du volume, cette profondeur étant déterminée en fonction d'un dit niveau de détection.

Ce mode de réalisation permet de localiser la fibre optique en trois dimensions. La fibre est ici localisée non seulement dans le plan du sol, mais également en profondeur. Le niveau de détection de la source permet d'estimer la profondeur de la fibre optique, par exemple en utilisant des modèles de référence (e.g. un modèle de propagation des ondes acoustiques dans le sol) ou des données de référence (e.g. des niveaux de détection obtenus pour différentes profondeurs d'une fibre dans un sol).

Selon un mode de réalisation, un dit niveau de détection de la source est déterminé en utilisant au moins un réseau de neurones.

L'utilisation d'un ou plusieurs réseaux de neurones permet de déterminer un niveau de détection de la source à partir de mesures optiques effectuées en sortie de la fibre par le dispositif de détection. Le ou les réseaux de neurones sont entraînés pour optimiser la fiabilité de la détection d'une source de rayonnement. Ce mode de réalisation permet ainsi d'obtenir des niveaux de détection fiables de la source, et contribue donc à localiser précisément la fibre optique.

Selon un mode de réalisation, ladite au moins une détermination d'une position de la fibre optique est mise en oeuvre par un dispositif de localisation et comprend :
- envoyer à la source une instruction de génération de vibrations et/ou de chaleur ; et/ou
- envoyer au dispositif de détection une instruction de mesure d'un niveau de détection.

Ce mode de réalisation permet d'automatiser la localisation de la fibre optique, et de limiter les interventions nécessaires de la part d'un utilisateur (e.g. un technicien). La localisation de la fibre optique est ici réalisée par un dispositif de localisation (e.g. un terminal utilisateur, ou un dispositif de réalité augmentée). Ce dernier contrôle la source et le dispositif de détection. Ces différents dispositifs étant contrôlés automatiquement, ce mode de réalisation permet une localisation particulièrement précise de la fibre optique.

Selon un mode de réalisation, ladite au moins détermination d'une position de la fibre optique est mise en oeuvre par un terminal utilisateur, et une dite position de la source est obtenue par localisation du terminal utilisateur.

Ce mode de réalisation est particulièrement avantageux en ce qu'il permet à un utilisateur de localiser une fibre optique enterrée en utilisant uniquement son terminal et le dispositif de détection. En effet, la localisation de la fibre optique est réalisée par le terminal utilisateur (e.g. un téléphone mobile, ou une tablette). Il est en outre considéré que la source de rayonnement est située au niveau (ou à proximité) du terminal utilisateur. C'est par exemple le terminal qui génère des vibrations acoustiques avec son haut-parleur, ou l'utilisateur (e.g. un technicien) muni du terminal qui génère des vibrations mécaniques en frappant le sol avec un outil.

Selon un mode de réalisation, ladite au moins une détermination d'une position de la fibre optique est mise en oeuvre par un dispositif dit de réalité augmentée. En outre, le dispositif de réalité augmentée détermine une dite position de la source et indique cette position à un utilisateur.

Ce mode de réalisation permet de faciliter la localisation d'une fibre optique par un utilisateur. La localisation de la fibre optique est ici réalisée par un dispositif de réalité augmentée (e.g. des lunettes de réalité augmentée). Ce dispositif guide de manière interactive un utilisateur pour localiser la fibre en lui indiquant où doit être positionnée la source.

Selon un aspect de l'invention, il est proposé un dispositif de localisation d'une fibre optique enfouie dans un volume, le dispositif comprenant un localisateur de fibre optique configuré pour déterminer au moins une position de la fibre optique en fonction d'au moins un niveau de détection d'une source de rayonnement pour au moins une position de la source fourni par un dispositif de détection connecté à la fibre optique.

Le dispositif de localisation proposé peut être configuré pour mettre en oeuvre n'importe lequel des modes de réalisation d'un procédé conforme à l'invention. En particulier, pour chaque étape ou opération d'un procédé conforme à l'invention, le dispositif de localisation peut comprendre un dispositif ou un module configuré pour mettre en oeuvre cette étape ou opération.

Selon un mode de réalisation, le dispositif de localisation est (compris dans, mis en oeuvre par) un dispositif parmi : un terminal utilisateur, et un dispositif dit de réalité augmentée.

Selon un mode de réalisation, le dispositif de réalité augmentée comporte un indicateur configuré pour indiquer à un utilisateur une position de la source.

Selon un mode de réalisation, la source de rayonnement est une source de vibration et/ou de chaleur.

Selon un aspect de l'invention, il est proposé un système de localisation d'une fibre optique enfouie dans un volume, le système comprenant :
- un dispositif de détection destiné à être connecté à la fibre optique et configuré pour fournir au moins un niveau de détection d'une source de rayonnement ; et
- un localisateur de fibre optique configuré pour déterminer au moins une position de la fibre optique en fonction dudit au moins un niveau de détection.

Selon un mode de réalisation, le système comprend la source de rayonnement, la source étant contrôlée par le dispositif de localisation.

Selon un aspect de l'invention, il est proposé un programme d'ordinateur (ou un ensemble de programmes d'ordinateur) comprenant des instructions pour mettre en oeuvre les étapes d'un procédé conforme à l'invention, lorsque le programme d'ordinateur est exécuté par au moins un processeur ou un ordinateur.

Le programme d'ordinateur peut être formé d'une ou plusieurs sous-parties stockées dans une même mémoire ou dans des mémoires distinctes. Le programme peut utiliser n'importe quel langage de programmation, et être sous la forme de code source, de code objet, ou de code intermédiaire entre code source et code objet, tel que dans une forme partiellement compilée, ou dans n'importe quelle autre forme souhaitable.

Selon un aspect de l'invention, il est proposé un support d'informations lisible par ordinateur comprenant un programme d'ordinateur conforme à l'invention.

Le support d'informations peut être n'importe quelle entité ou dispositif capable de stocker le programme. Par exemple, le support peut comporter un moyen de stockage, tel qu'une mémoire non-volatile ou ROM, par exemple un CD-ROM ou une ROM de circuit microélectronique, ou encore un moyen d'enregistrement magnétique, par exemple une disquette ou un disque dur. D'autre part, le support de stockage peut être un support transmissible tel qu'un signal électrique ou optique, qui peut être acheminé via un câble électrique ou optique, par radio ou par un réseau de télécommunication ou par un réseau informatique ou par d'autres moyens. Le programme selon l'invention peut être en particulier téléchargé sur un réseau informatique. Alternativement, le support d'informations peut être un circuit intégré dans lequel le programme est incorporé, le circuit étant adapté pour exécuter ou pour être utilisé dans l'exécution du procédé en question.

Le dispositif, le système, le programme d'ordinateur et le support d'informations proposés disposent des avantages décrits ci-dessus en lien avec le procédé proposé de localisation.

### Brève description des dessins

D'autres caractéristiques et avantages de la présente invention ressortiront de la description fournie ci-après, illustrant des modes de réalisation de l'invention donnés à titre d'exemple et dépourvus de tout caractère limitatif, en référence aux dessins ci-joints :
La figure 1 représente un système de localisation d'une fibre optique selon un mode de réalisation de l'invention ;
La figure 2 représente des étapes d'un procédé de localisation d'une fibre optique selon un mode de réalisation de l'invention ;
La figure 3 représente un exemple de zone de recherche d'une fibre optique et de niveaux de détection, utilisés par un système de localisation selon un mode de réalisation de l'invention ;
La figure 4 représente un exemple de zones de recherche d'une fibre optique, utilisées par un système de localisation selon un mode de réalisation de l'invention ;
La figure 5 représente un exemple de carte fournie par un dispositif de localisation d'une fibre optique selon un mode de réalisation de l'invention ;
La figure 6 représente l'architecture d'un système de localisation d'une fibre optique selon un mode de réalisation de l'invention ; et
La figure 7, la figure 8, et la figure 9 représentent un système de localisation d'une fibre optique selon des modes de réalisation de l'invention.

### Description des modes de réalisation

La présente invention s'applique, en particulier, à la mise en oeuvre de systèmes de localisation de fibres optiques enterrées. La description de l'invention ci-dessous se réfère à une fibre optique enfouie dans un sol. Toutefois, l'invention s'applique également à la localisation d'une fibre enfouie dans un mur, un plafond, ou tout autre volume.

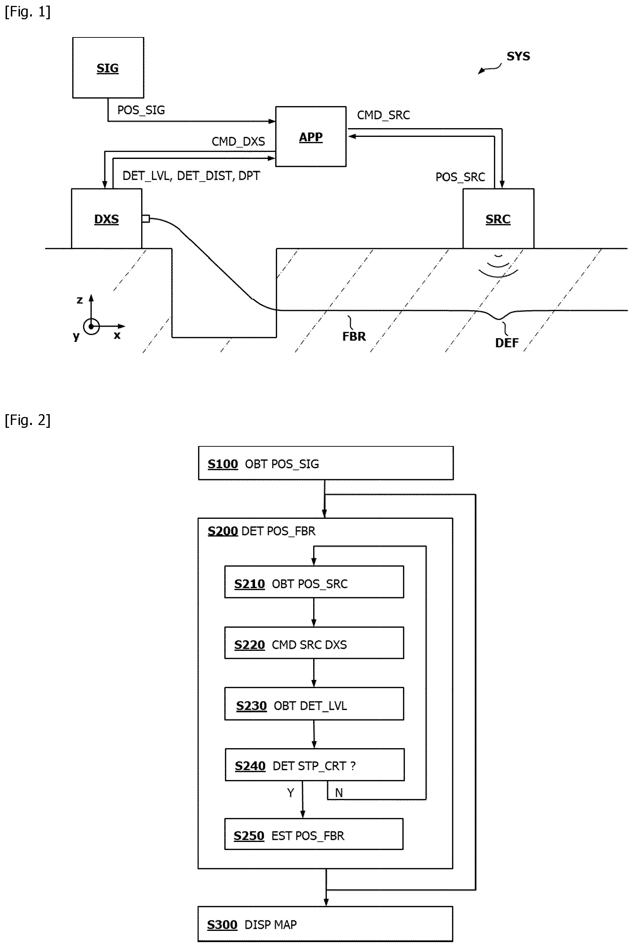

**La** **figure 1** représente un système de localisation d'une fibre optique selon un mode de réalisation de l'invention. Cette figure est décrite ci-après pour introduire la présente invention et exemplifier un mode de réalisation.

Le système de localisation SYS comprend, selon ce mode de réalisation : un dispositif de localisation APP, une source de rayonnement SRC, un dispositif de détection DXS, et un système d'information géographique SIG.

Le système SYS proposé permet de localiser la fibre optique souterraine FBR. Comme illustré sur la figure 1, la fibre optique FBR est en partie enfouie dans un sol. Il peut, par exemple, s'agir du sol d'un bâtiment ou d'une rue.

Le système d'information géographique SIG est configuré pour fournir au dispositif de localisation APP une ou plusieurs positions théoriques POS_SIG de la fibre optique FBR. Ces positions théoriques correspondent aux informations de localisation saisies lors de l'installation de la fibre optique FBR. Comme mentionné précédemment, il peut exister des différences significatives entre les informations de localisation saisies lors de l'installation d'une fibre optique et la position réelle de celle-ci.

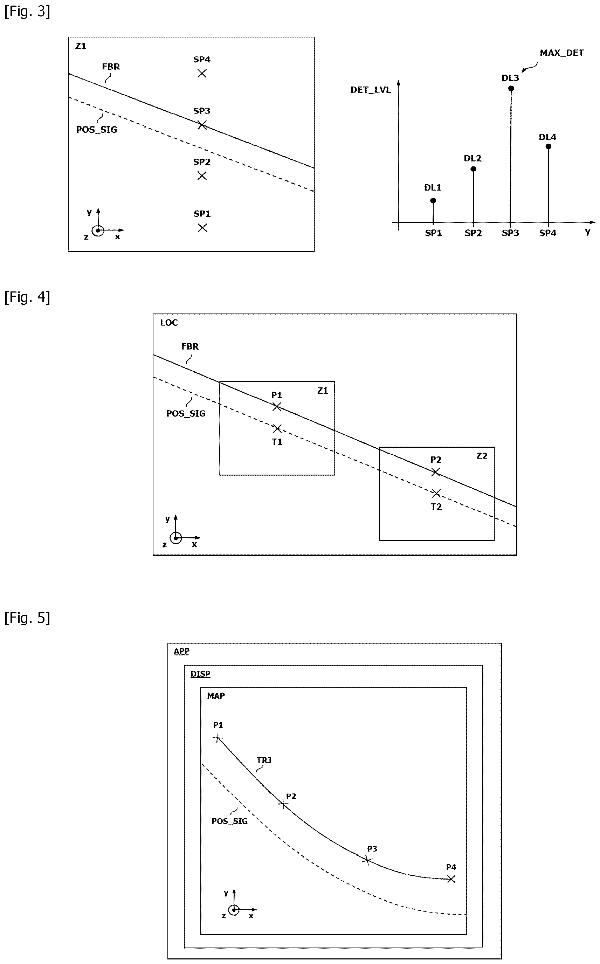

Ces informations de localisation peuvent être utilisées par le dispositif de localisation APP pour déterminer les zones dans lesquelles la fibre optique FBR doit être recherchée, ce que nous détaillons en référence à la figure 4. Les positions théoriques POS_SIG de la fibre FBR peuvent également être indiquées à un utilisateur par le dispositif APP.

La source de rayonnement SRC est située à la surface du sol ou au voisinage de cette surface. Elle est destinée à être détectée par le dispositif de détection DXS qui utilise la fibre optique FBR comme capteur.

La source de rayonnement SRC est, selon un mode de réalisation, une source de vibration et/ou de chaleur. La vibration peut être mécanique et/ou sonore, etc. Par « source sonore », il est entendu une source configuré pour émettre un son parmi tous les types de sons : des infrasons aux ultrasons en passant par les sons audibles.

En particulier, la source SRC est configurée pour générer des vibrations acoustiques et/ou mécaniques, et/ou de la chaleur. Nous utilisons également ci-après l'expression « source de stimuli » pour désigner la source SRC et renvoyer à tout type de stimuli, et notamment les vibrations acoustiques et mécaniques, et la chaleur.

La source SRC peut être, par exemple, un haut-parleur générant des vibrations acoustiques, ou un dispositif de percussion générant des vibrations mécaniques. Les vibrations acoustiques ou mécaniques se propagent sous la forme d'ondes dans le sol et provoquent des déformations DEF de la fibre optique FBR (déformations accentuées sur cette figure à titre illustratif). Il en est de même lorsque la source SRC est une source de chaleur telle qu'un chalumeau. La source de chaleur SRC provoque une conduction thermique dans le sol, ce qui induit une déformation DEF de la fibre optique FBR.

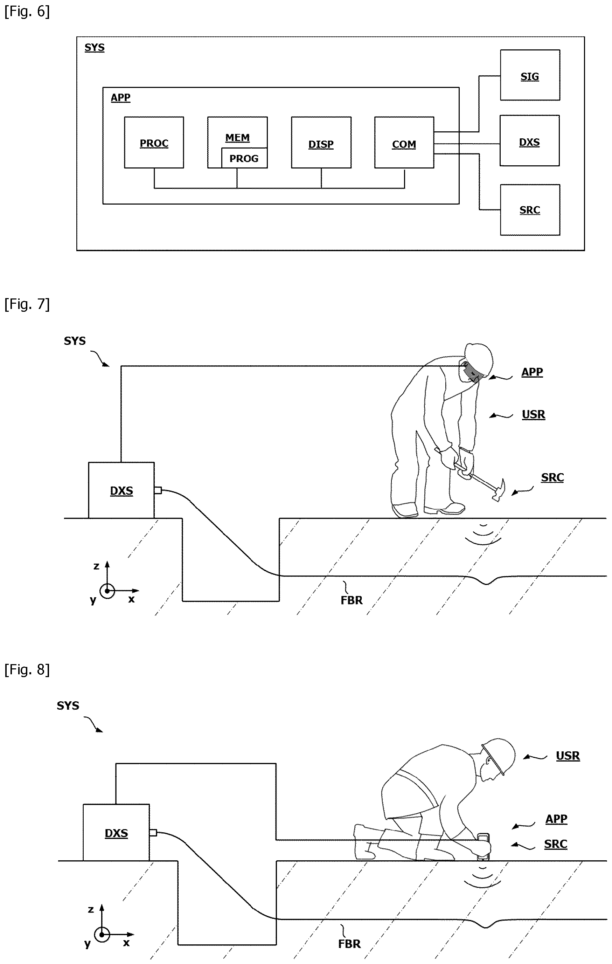

Cette source SRC peut notamment être contrôlée par les commandes CMD_SRC envoyées par le dispositif de localisation APP. Elle peut également être configurée pour fournir sa position POS_SRC au dispositif APP. D'autres modes de réalisation sont présentés en référence aux figures 7 et 8, dans lesquels la source SRC n'est pas contrôlée par le dispositif APP mais plutôt par un utilisateur (e.g. un technicien). Il peut, par exemple, s'agir de coups de marteau réalisés par un utilisateur à la surface du sol. Ainsi, les stimuli peuvent être générés manuellement (e.g. par un technicien), ou par une source automatique de stimuli.

Il pourrait également être envisagé des modes de réalisation dans lesquels la source SRC est capable de produire des stimuli de différentes natures : des vibrations acoustiques, des vibrations mécaniques, et/ou de la chaleur. Le type de stimuli générés par la source SRC pourrait ainsi être sélectionné en fonction de la nature du sol. Cela permet d'améliorer la détection de la source SRC par le dispositif de détection DXS, et contribue donc à localiser précisément la fibre optique FBR.

En outre, selon un mode de réalisation, la source SRC génère des stimuli en utilisant une séquence de code (e.g. une séquence de référence). Par exemple, la source SRC peut utiliser une séquence de code comprenant une série de stimuli longs et courts. Une telle séquence de code est notamment connue du dispositif de détection DXS, ce qui permet d'améliorer la détection de la source SRC. En effet, dans un environnement bruité (e.g. une route avec des vibrations générées par des véhicules ou des travaux à proximité), l'utilisation d'une séquence de code permet de distinguer plus facilement les stimuli générés par la source SRC du bruit ou d'autres perturbations. Cela permet ainsi d'améliorer la détection de la source SRC, et contribue à localiser de manière précise la fibre optique FBR.

Le dispositif de détection DXS est connecté à une extrémité de la fibre optique FBR (e.g. au niveau d'un point de branchement optique). Il utilise la fibre optique FBR comme un capteur continu pour détecter la source SRC.

Le dispositif de détection DXS peut être un dispositif de détection acoustique distribuée (ou « distributed acoustic sensing» en anglais), ou un dispositif de détection de vibration distribuée (ou « distributed vibration sensing » en anglais). Il pourrait également s'agir d'un dispositif de détection de température distribuée (ou « distributed température sensing » en anglais). Ces dispositifs utilisent en particulier des techniques de réflectométrie optique temporelle.

Le dispositif DXS envoie des impulsions lumineuses dans la fibre optique FBR et effectue des mesures optiques en sortie de la fibre. En mesurant ainsi les caractéristiques de la lumière réfléchie (e.g. amplitude, phase, ou autres paramètres optiques), le dispositif DXS peut détecter les déformations DEF de la fibre optique FBR induites par la source SRC.

Le dispositif de détection DXS est ainsi configuré pour fournir un niveau de détection DET_LVL de la source SRC pour une position donnée POS_SRC de celle-ci. Ce niveau de détection DEL_LVL caractérise un niveau de déformation DEF de la fibre FBR, et donc caractérise la distance entre la source SRC et la fibre optique FBR. Plus la source SRC est proche de la fibre FBR, plus les déformations DEF induites sont importantes, et plus le niveau de détection DET_LVL est élevé.

Selon un mode de réalisation, ce dispositif DXS utilise au moins un réseau de neurones prenant en entrée des mesures optiques réalisées en sortie de la fibre, et fournissant en sortie un niveau de détection de la source DET_LVL. Un tel réseau de neurones peut être entraîné en utilisant des données simulées (i.e. générées par ordinateur), et/ou des données de terrain.

Plus particulièrement, le dispositif DXS peut utiliser une pluralité de réseaux de neurones respectivement dédiés la détection d'un type particulier de stimuli. Il peut ainsi sélectionner le réseau de neurones utilisé en fonction du type de stimuli générés par la source SRC.

Comme illustré sur la figure 1, le dispositif de détection DXS peut fournir une distance DET_DIST à laquelle la source SRC est détectée, c'est-à-dire la longueur de fibre entre la déformation DEF et le dispositif de détection DXS. Ce dispositif peut également fournir une profondeur DPT de la fibre optique FBR au niveau de la déformation DEF (i.e. à l'endroit où la source SRC est détectée). La profondeur de la fibre est définie par rapport à la surface du sol.

Selon le mode de réalisation de la figure 1, le dispositif de détection DXS est contrôlé par le dispositif APP. Par exemple, le dispositif APP envoie une commande CMD_DXS comprenant une instruction de mesure d'un niveau de détection DET_LVL. En variante, le dispositif DXS pourrait fonctionner de manière autonome et fournir régulièrement des niveaux de détection DET_LVL au dispositif APP.

Le dispositif de localisation APP est configuré pour déterminer au moins une position de la fibre optique FBR. En particulier, il estime la position de la fibre optique FBR en utilisant les niveaux de détection DET_LVL fournis par le dispositif DXS.

Le dispositif APP peut notamment mettre en oeuvre une application destinée à un utilisateur (e.g. un technicien) pour lui permettre de localiser la fibre optique FBR. Par exemple, le dispositif de localisation APP peut être un terminal utilisateur (e.g. un téléphone mobile, ou un smartphone), ou un dispositif de réalité augmentée (e.g. des lunettes de réalité augmentée).

Par dispositif de réalité augmentée, il est entendu ici un dispositif configuré pour intégrer sur un dispositif d'affichage des éléments virtuels (générés par ordinateur) au sein d'un environnement réel. Notons qu'un terminal utilisateur (e.g. un smartphone) peut également mettre en oeuvre des techniques de réalité augmentée.

Le dispositif APP peut comprendre un dispositif d'affichage DISP pour indiquer à un utilisateur : les niveaux de détection DET_LVL fournis par le dispositif de détection DXS, les positions théoriques de la fibre POS_SIG, et/ou les positions de la fibre FBR déterminées par le dispositif APP. Ce dispositif APP peut aussi mettre en oeuvre la source de stimuli SRC, ce qui est présenté en référence à la figure 8.

Nous détaillons ci-dessous le fonctionnement du dispositif de localisation APP en référence aux figures 2 à 5, et son architecture matérielle en référence à la figure 6.

**La** **figure 2** représente des étapes d'un procédé de localisation d'une fibre optique selon un mode de réalisation de l'invention. Cette figure présente le fonctionnement du dispositif de localisation APP précédemment introduit.

Selon le mode de réalisation illustré par la figure 2, le procédé proposé comprend tout ou partie des étapes S100 à S300 décrites ci-après et mises en oeuvre par le dispositif APP.

À l'étape S100, le dispositif APP obtient une ou plusieurs positions théoriques POS_SIG de la fibre optique FBR (i.e. des positions attendues, ou saisies). En particulier, il reçoit ces informations de localisation en provenance du système d'information géographique SIG.

À l'étape S200, le dispositif APP détermine au moins une position de la fibre optique POS_FBR dans une zone de recherche donnée.

Le dispositif APP peut réaliser plusieurs itérations de l'étape S200 pour différentes zones de recherches. Il détermine ainsi une pluralité de positions de la fibre POS_FBR. Nous détaillons ce point en référence à la figure 4.

Pour déterminer une position de la fibre POS_FBR dans une zone de recherche donnée, et selon le mode de réalisation de la figure 2, l'étape S200 comprend tout ou partie des étapes S210 à S250 décrites ci-dessous.

À l'étape S210, le dispositif APP obtient une position POS_SRC de la source de stimuli SRC. Cette position POS_SRC peut être définie par rapport à la surface du sol, ou de manière absolue par rapport au référentiel terrestre (e.g. des coordonnées géographiques fournies par un dispositif de positionnement d'un terminal).

La position de la source POS_SRC peut être obtenue de différentes manières. Elle peut être fournie au dispositif APP par la source SRC elle-même, comme illustré par la figure 1. En variante, la position POS_SRC peut correspondre à la position du terminal utilisateur APP mettant en oeuvre la localisation de la fibre FBR. Cette position POS_SRC peut également être déterminée par le dispositif APP, puis indiquée à un utilisateur (e.g. technicien) qui générera des vibrations à la position indiquée. Ces différents modes de réalisation sont décrits en référence aux figures 7 à 9.

À l'étape S220, le dispositif APP contrôle la source SRC et/ou le dispositif de détection DXS. Il envoie à la source SRC une commande CMD_SRC comprenant une instruction de génération de stimuli, et/ou envoie au dispositif de détection DXS une commande CMD_DXS comprenant une instruction de mesure d'un niveau de détection de la source DET_LVL.

De manière alternative, la source SRC et le dispositif de détection DXS pourraient fonctionner de manière autonome, ou être contrôlés par un utilisateur.

À l'étape S230, le dispositif APP obtient un niveau de détection DET_LVL de la source SRC. Ce niveau de détection est fourni par le dispositif de détection DXS et est associé à la position de la source POS_SRC.

Le dispositif APP peut indiquer à un utilisateur le niveau de détection DET_LVL obtenu pour cette position de la source POS_SRC (e.g. par l'intermédiaire d'une application sur un terminal).

À l'étape S240, le dispositif APP détermine si un critère d'arrêt STP_CRT est vérifié. Si tel est le cas, le procédé se poursuit à l'étape S250. Sinon, le procédé réitère les étapes S210-S230 de sorte à obtenir un niveau de détection DET_LVL supplémentaire pour une position différente de la source POS_SRC.

Ce critère d'arrêt STP_CRT correspond, selon un mode de réalisation, au fait qu'un niveau maximum de détection de la source DET_LVL a été détecté par le dispositif APP et/ou signalé par un utilisateur. Le dispositif APP peut également indiquer à l'utilisateur qu'un niveau maximum de détection DET_LVL a été détecté (e.g. par l'intermédiaire d'une application sur un terminal).

Si un maximum n'a pas été détecté ou signalé, le dispositif APP réitère les étapes S210-S230 pour obtenir un niveau de détection DET_LVL associé à une autre position de la source POS_SRC. La source de stimuli SRC peut ainsi être déplacée de proche en proche pour atteindre un niveau de détection maximum de la source SRC. Nous présentons un exemple de recherche du niveau maximum de détection en référence à la figure 3.

Dans le contexte de l'invention, il pourrait être envisagé d'utiliser d'autres critères d'arrêt. Par exemple, un critère d'arrêt pourrait correspondre au fait d'obtenir un nombre suffisant de mesures, c'est-à-dire un nombre de niveaux de détection associés à des positions différentes de la source supérieur à un seuil.

À l'étape S250, le dispositif APP estime une position de la fibre POS_FBR en fonction des niveaux de détection DET_LVL obtenus et des positions de la source associées POS_SRC.

Cette position estimée POS_FBR est une position planaire. Elle caractérise l'emplacement d'un point de la fibre FBR dans un plan sensiblement parallèle au sol (le plan x-y sur les figures). Elle peut être définie de manière relative par rapport à la surface du sol, ou de manière absolue par rapport au référentiel terrestre (e.g. coordonnées géographiques).

En particulier, la position estimée de la fibre POS_FBR correspond (est associée) à la position de la source SRC pour laquelle le niveau de détection obtenu DET_LVL est maximum, parmi les différentes positions de la source POS_SRC dans la zone de recherche considérée. Autrement dit, le dispositif APP associe une position d'un point de la fibre recherchée FBR à la position de la source POS_SRC pour laquelle un niveau maximum de détection est détecté et/ou signalé.

Dans le contexte de l'invention, d'autres modes de réalisation pourraient également être envisagés. La position de la fibre optique POS_FBR pourrait être estimée en utilisant une interpolation des niveaux de détection, puis en sélectionnant la position pour laquelle le niveau de détection interpolé est maximum. Le dispositif APP peut également utiliser les autres informations fournies par le dispositif de détection DXS, telles que la distance DET_DIST, pour estimer la position de la fibre FBR.

De plus, nous avons décrit ici la solution proposée en considérant une pluralité de niveaux de détection DET_LVL associés à différentes positions de la source POS_SRC. Il est cependant possible d'obtenir une estimation de la position de la fibre POS_FBR à partir d'un unique niveau de détection DET_LVL et de la position de la source POS_SRC associée, par exemple en utilisant des modèles de référence, ou des données de référence, ou les autres informations fournies par le dispositif de détection DXS.

Selon un mode de réalisation, le dispositif APP obtient à l'étape S250 une profondeur de la fibre DPT par rapport à la surface du sol. La fibre optique FBR est ainsi localisée en trois dimensions. Cette profondeur DPT est déterminée soit par le dispositif de détection DXS, soit par le dispositif APP lui-même.

Plus précisément, la profondeur DPT est déterminée en fonction du niveau maximum de détection obtenu, c'est-à-dire le niveau de détection obtenu à la position de la source POS_SRC associée à la position estimée de la fibre POS_FBR. La profondeur de la fibre optique DPT peut être déterminée à partir d'un niveau de détection DET_LVL en utilisant des modèles de référence (e.g. un modèle de propagation des ondes acoustiques dans le sol), ou des données de référence (e.g. des niveaux de détection obtenus pour différentes profondeurs de la fibre dans un sol).

À l'étape S300, le dispositif APP fournit une carte MAP représentative d'au moins une position déterminée de la fibre POS_FBR. Cette carte MAP correspond à une représentation graphique sur laquelle est localisée la fibre optique FBR. Nous présentons plus en détail cette carte MAP en référence à la figure 5.

En particulier, le dispositif APP resitue cette carte MAP à un utilisateur par l'intermédiaire d'un dispositif d'affichage DISP. En variante, cette carte MAP et/ou les positions déterminées POS_FBR pourraient être communiquées par le dispositif APP à un autre dispositif pour être stockées ou affichées.

Le procédé proposé permet ainsi de localiser précisément une fibre optique enterrée, et ce de manière non-invasive. Il convient de noter que l'ordre dans lequel s'enchaînent les étapes décrites ci-dessus ne constitue qu'un exemple de réalisation, d'autres variantes étant possibles.

Le procédé proposé comprend tout ou partie des étapes mises en oeuvre par le dispositif de localisation APP. En outre, le procédé proposé peut comprendre les étapes mises en oeuvre par le dispositif de détection DXS et/ou la source SRC.

**La** **figure 3** représente un exemple de zone de recherche d'une fibre optique et de niveaux de détection, utilisés par un système de localisation selon un mode de réalisation de l'invention. Cette figure est présentée pour exemplifier la mise en oeuvre de l'étape S200, au cours de laquelle le dispositif APP détermine une position de la fibre POS_FBR dans une zone de recherche.

Cette figure représente une vue de dessus d'une zone de recherche Z1. Les informations de localisation POS_SIG saisies lors de l'installation de la fibre FBR y sont indiquées en pointillés, tandis que la localisation réelle de la fibre FBR est représentée en trait plein.

Comme mentionné précédemment, et selon un mode de réalisation, le dispositif APP obtient plusieurs niveaux de détection DET_LVL associés à différentes positions de la source POS_SRC (e.g. en réalisant plusieurs itérations des étapes S210-230). Il utilise ensuite ces niveaux de détection DET_LVL pour localiser la fibre optique FBR.

Considérons l'exemple de la figure 3. Un utilisateur du dispositif APP déplace la source de stimuli SRC (selon l'axe y) et cherche à maximiser le niveau de détection DET_LVL fourni par le dispositif de détection DXS. Le dispositif APP obtient ainsi les niveaux de détection DL1-DL4 respectivement associés aux positions de la source SP1-SP4. Le dispositif APP associe alors la position de la source SP3, pour laquelle le niveau maximum de détection MAX_DET a été obtenu, à une position de la fibre POS_FBR.

Nous avons décrit ici un exemple particulier de recherche du niveau maximum de détection. Bien évidemment, d'autres stratégies de recherche pourraient être envisagées. Par exemple, la source de stimuli SRC pourrait être déplacée en utilisant une méthode de recherche en croix ou en spirale, ou encore en quadrillant la zone de recherche Z1.

Notons également que le dispositif APP peut guider l'utilisateur dans la recherche du niveau maximum de détection en indiquant le niveau de détection DET_LVL fourni par le dispositif DXS. Il peut en outre indiquer à l'utilisateur qu'un niveau maximum MAX_DET a été détecté.

**La** **figure 4** représente un exemple de zones de recherche d'une fibre optique, utilisées par un système de localisation selon un mode de réalisation de l'invention.

Nous décrivons cette figure pour exemplifier la mise en oeuvre de plusieurs itérations de l'étape S200, au cours desquelles le dispositif APP détermine plusieurs positions de la fibre POS_FBR dans différentes zones de recherche. La description donnée ci-dessous ne constitue qu'un exemple de réalisation de l'invention, d'autres stratégies de recherche pouvant être utilisées pour localiser une fibre optique FBR.

Cette figure représente une zone géographique LOC (e.g. une pièce d'un bâtiment) vue de dessus. La fibre optique FBR est enterrée dans le sol de cette zone LOC, et le système de localisation SYS est utilisé pour localiser celle-ci.

Le dispositif APP sélectionne une première zone de recherche Z1 autour d'une position théorique T1 de la fibre optique FBR. La position théorique T1 est obtenue à partir des informations de localisation POS_SIG saisies lors de l'installation. Le dispositif APP met en oeuvre l'étape S200 décrite ci-dessus pour cette première zone de recherche Z1, et détermine ainsi une première position P1 de la fibre optique. Ensuite, le dispositif APP sélectionne une deuxième zone de recherche Z2 centrée autour d'une autre position théorique T2 de la fibre. Il détermine alors une deuxième position P2 de la fibre optique dans cette zone de recherche Z2 en mettant en oeuvre l'étape S200.

En réitérant ainsi l'étape S200 pour différentes zones de recherche au sein d'une zone géographique LOC, le dispositif APP permet de localiser la fibre optique FBR et de déterminer précisément son parcours dans le sol. Il fournit ensuite à l'utilisateur une carte MAP représentative des positions déterminées de la fibre POS_FBR, ce que nous détaillons en référence à la figure suivante.

**La** **figure 5** représente un exemple de carte fournie par un dispositif de localisation d'une fibre optique selon un mode de réalisation de l'invention. Cette figure illustre un exemple de carte MAP fournie à l'étape S300 par le dispositif de localisation APP.

Comme mentionné précédemment, le dispositif APP peut afficher la carte MAP représentative des positions déterminées de la fibre FBR en utilisant un dispositif d'affichage DISP (e.g. l'écran d'un terminal utilisateur, ou des lunettes de réalité augmentée).

Selon un mode de réalisation, la carte MAP fournie par le dispositif APP indique les différentes positions déterminées de la fibre FBR, c'est-à-dire des points de localisation de la fibre optique. La figure 5 illustre des points de localisation P1-P4 de la fibre optique FBR. Il pourrait également être envisagé que la carte MAP indique une ou plusieurs positions théoriques POS_SIG de la fibre optique FBR.

Selon un mode de réalisation, la carte MAP fournie par le dispositif APP comprend un tracé de la fibre TRJ obtenu à partir des positions déterminées P1-P4. Cela permet à un utilisateur de visualiser le parcours de la fibre optique FBR dans le sol. La carte MAP peut indiquer soit les points de localisation de la fibre P1-P4, soit le tracé de la fibre TRJ, voire les deux à la fois. Ce dernier cas est illustré par la figure 5.

Selon ce mode réalisation, le dispositif APP génère le tracé de la fibre TRJ à partir des positions déterminées POS_FBR. Il met ainsi en oeuvre une étape d'interpolation ou de régression des positions déterminées de la fibre optique POS_FBR.

Le dispositif APP peut utiliser toute technique d'interpolation ou de régression pour générer le tracé TRJ. Nous pouvons citer, par exemple, les techniques d'interpolations linéaires ou polynomiales, ou encore les interpolations par splines. Également, le dispositif APP pourrait utiliser une régression linéaire ou non-linéaire, voire un algorithme d'apprentissage automatique (e.g. un réseau de neurones artificiels) pour générer le tracé TRJ.

Notons que dans le cas d'une interpolation, le tracé de la fibre TRJ passe par les positions déterminées POS_FBR, tel qu'illustré sur la figure 5. Dans le cas d'une régression, le tracé de la fibre TRJ peut ne pas passer par les positions déterminées POS_FBR et seulement s'en approcher.

De plus, le dispositif APP peut utiliser un rayon de courbure minimum de la fibre optique pour générer le tracé de la fibre TRJ. En fonction du type de la fibre optique FBR, celle-ci est installée en respectant un certain rayon de courbure minimum. Si la fibre optique FBR présente un coude dont le rayon de courbure est inférieure à ce minimum, le fonctionnement de la fibre optique n'est pas assuré, et celle-ci pourrait être endommagée. Il est donc proposé ici d'utiliser ce rayon de courbure minimum pour générer le tracé de la fibre TRJ, c'est-à-dire que le tracé généré TRJ respecte cette contrainte de courbure de la fibre FBR.

Nous avons décrit ci-dessus le fonctionnement du dispositif de localisation APP. Nous décrivons maintenant son architecture matérielle en référence à la figure suivante.

**La** **figure 6** représente l'architecture d'un système de localisation d'une fibre optique selon un mode de réalisation de l'invention.

Le système de localisation SYS comprend tout ou partie des éléments suivants : le dispositif de localisation APP, le système SIG, le dispositif de détection DXS, et la source SRC.

Le dispositif de localisation APP comprend, selon le mode de réalisation de la figure 6, au moins un processeur PROC, et au moins une mémoire MEM.

Plus particulièrement, le dispositif APP dispose, selon un mode de réalisation, de l'architecture matérielle d'un ordinateur. La mémoire MEM constitue un support d'informations conforme à l'invention, c'est-à-dire lisible par le processeur PROC et sur lequel est enregistré un programme d'ordinateur PROG conforme à l'invention. Le programme PROG comporte des instructions pour réaliser des étapes d'un procédé de localisation conforme à l'invention, lorsque le programme PROG est exécuté par le processeur PROC. Le programme PROG définit notamment les modules fonctionnels du dispositif APP, qui commandent les éléments matériels de ce dernier.

Le dispositif APP peut également comprendre un dispositif d'affichage DISP. Le dispositif d'affichage DISP peut, par exemple, être utilisé pour restituer la carte MAP à un utilisateur. Il pourrait également être utilisé pour signaler à un utilisateur les niveaux de détection DET_LVL fournis par le dispositif de détection DXS.

Tel qu'illustré par la figure 6, le dispositif APP comprend un dispositif de communication COM configuré pour communiquer avec le dispositif de détection DXS, et/ou la source SRC, et/ou le système SIG. Aucune limitation n'est attachée à la nature des interfaces de communication entre ces dispositifs, qui peuvent être filaires ou non filaires, et peuvent mettre en oeuvre tout protocole connu de l'homme du métier.

De manière générale, pour chaque étape (ou opération) d'un procédé de localisation d'une fibre optique conforme à l'invention, le dispositif APP peut comprendre un élément correspondant configuré pour réaliser ladite étape.

En particulier, selon un mode de réalisation, le dispositif de localisation APP comprend au moins un des éléments suivants :
- un obtenteur de niveau de détection d'une source (e.g. un récepteur) configuré pour obtenir au moins un niveau de détection DET_LVL de la source SRC pour une position de la source POS_SRC et fourni par le dispositif de détection DXS connecté à la fibre FBR ; et
- un estimateur de position de fibre optique configuré pour estimer au moins une position de la fibre optique POS_FBR en fonction dudit au moins un niveau de détection obtenu DET_LVL.

Nous avons précédemment présenté un mode de réalisation particulier du système de localisation proposé, notamment illustré par la figure 1. Nous présentons d'autres modes de réalisation de ce système SYS en référence aux figures suivantes.

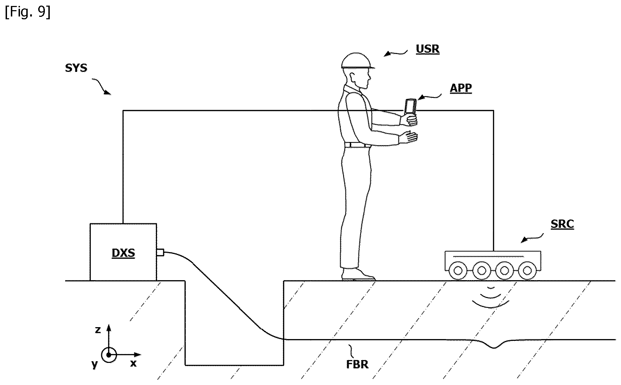

**La** **figure 7****, la** **figure 8** **et la** **figure 9** représentent un système de localisation d'une fibre optique selon des modes de réalisation de l'invention.

Ces figures illustrent plusieurs modes de réalisation du système de localisation SYS à titre d'exemple. Le système SYS peut en outre comporter l'une ou plusieurs des caractéristiques suivantes, prises isolément ou selon toutes les combinaisons techniquement possibles.

La figure 7 illustre un mode de réalisation dans lequel le dispositif APP est mis en oeuvre par des lunettes de réalité augmentée portées par un utilisateur USR (e.g. un technicien). La source de stimuli SRC est réalisée ici par l'utilisateur USR qui frappe le sol avec un outil (e.g. un marteau). Selon ce mode de réalisation, le dispositif APP localise la fibre optique FBR enterrée en procédant de la manière suivante.

Le dispositif APP détermine une position POS_SRC de la source de vibration SRC (étape S210). Il indique cette position à l'utilisateur USR, qui la voit apparaître dans son champ de vision. L'utilisateur USR frappe alors le sol avec son outil à la position indiquée. Le dispositif APP communique avec le dispositif de détection DXS pour obtenir le niveau de détection de la source DET_LVL associé à cette position POS_SRC (étape S230).

Le dispositif APP réitère ces étapes pour obtenir plusieurs niveaux de détection DET_LVL associées à différentes positions de la source POS_SRC. Il utilise ensuite les niveaux de détection obtenus pour déterminer une position de la fibre optique POS_FBR (étape S250).

L'utilisation de lunettes de réalité augmentée est particulièrement avantageuse en ce qu'elle permet de guider de manière interactive l'utilisateur USR pour localiser la fibre optique FBR.

La figure 8 illustre un mode de réalisation dans lequel le dispositif de localisation APP est mis en oeuvre par le terminal d'un utilisateur USR (e.g. un smartphone, ou une tablette). Le dispositif APP réalise également la source de stimuli SRC, par exemple en utilisant le haut-parleur du terminal. Nous présentons ci-dessous un exemple de fonctionnement du dispositif de localisation APP selon ce mode de réalisation.

L'utilisateur USR place le dispositif APP sur la surface du sol (ou au voisinage de cette surface). Le dispositif APP obtient la position POS_SRC de la source de stimuli SRC en localisant le dispositif APP (étape S210). Pour obtenir cette position POS_SRC, le dispositif APP utilise par exemple un récepteur GPS, ou tout autre moyen de positionnement. Ensuite, le dispositif APP active la source stimuli SRC (étape S220). Il reçoit en provenance du dispositif de détection DXS un niveau de détection DET_LVL associé à la position de la source POS_SRC (étape S230). Le dispositif APP peut ainsi obtenir plusieurs niveaux de détection DET_LVL pour différentes positions de la source POS_SRC, et en déduire une position de la fibre POS_FBR (étape S250).

Ce mode de réalisation permet avantageusement à l'utilisateur USR de localiser la fibre optique FBR à partir uniquement de son terminal APP et du dispositif de détection DXS.

La figure 9 illustre un mode de réalisation dans lequel le dispositif de localisation APP est mis en oeuvre par le terminal d'un utilisateur USR. Selon ce mode de réalisation, le dispositif APP contrôle une source de stimuli SRC configurée pour générer des vibrations acoustiques et/ou mécaniques, et/ ou de la chaleur. Cette figure illustre une source de stimuli SRC mise en oeuvre par un dispositif terrestre (e.g. un robot), mais un dispositif aérien (e.g. un drone) pourrait également être utilisé.

Le dispositif APP peut procéder de la manière suivante pour localiser la fibre optique FBR. Tout d'abord, le dispositif APP obtient la position de la source POS_SRC (étape S210). Par exemple, le dispositif source SRC se déplace de manière autonome et communique sa position POS_SRC au dispositif APP. En variante, le dispositif APP contrôle le dispositif source SRC pour qu'il atteigne une position donnée POS_SRC.

Ensuite, le dispositif APP envoie au dispositif source SRC une instruction de génération de stimuli (étape S220). Le dispositif APP communique avec le dispositif de détection DXS pour obtenir un niveau de détection de la source DET_LVL associé à cette position POS_SRC (étape S230). Le dispositif APP utilise un ou plusieurs niveaux de détection DET_LVL ainsi obtenus pour déterminer la position de la fibre POS_FBR (étape S250).

Ce mode de réalisation permet d'automatiser la localisation de la fibre optique, et de limiter les interventions nécessaires de la part de l'utilisateur (e.g. un technicien). Les différents dispositifs du système de localisation étant contrôlés automatiquement, ce mode de réalisation permet une localisation particulièrement précise de la fibre optique.

**Variantes additionnelles** : Un homme du métier comprendra que les modes de réalisation et variantes décrits ci-dessus ne constituent que des exemples non limitatifs de mise en oeuvre de l'invention. En particulier, l'homme du métier pourra envisager une quelconque adaptation ou combinaison des modes de réalisation et variantes décrits ci-dessus afin de répondre à un besoin bien particulier.

Il convient également de noter que l'ordre dans lequel s'enchaînent les étapes d'un procédé conforme à l'invention, notamment en référence aux dessins ci-joints, ne constitue qu'un exemple de réalisation dépourvu de tout caractère limitatif, des variantes étant possibles. En particulier, un procédé conforme à l'invention peut comprendre une ou plusieurs itérations des étapes décrites ci-dessus, notamment en référence aux dessins ci-joints. Par ailleurs, les signes de référence ne limitent pas l'étendue de la protection, leur unique fonction étant de faciliter la compréhension des revendications.

## Revendications

1. Procédé de localisation d'une fibre optique (FBR) enfouie dans un volume, le procédé comprenant au moins :
- déterminer (S200) une position de la fibre optique (POS_FBR) en fonction d'au moins un niveau de détection (DET_LVL) d'une source de rayonnement (SRC) pour au moins une position de la source (POS_SRC) fourni par un dispositif de détection (DXS) connecté à la fibre optique (FBR)
et dans lequel une détermination (S200) d'une position de la fibre optique (POS_FBR) comprend :
- obtenir (S250) une profondeur de la fibre optique (DPT) par rapport à une surface du volume, cette profondeur (DPT) étant déterminée en fonction d'un dit niveau de détection (DET_LVL).

2. Procédé selon la revendication 1, dans lequel ladite position estimée de la fibre optique (POS_FBR) correspond à la position de la source (SRC) pour laquelle le niveau de détection obtenu (DET_LVL) est maximum parmi plusieurs positions de la source (POS_SRC) situées dans une zone de recherche (Z1).

3. Procédé selon la revendication 1 ou 2, comprenant plusieurs déterminations (S200) d'une position de la fibre optique (POS_FBR) respectivement mises en oeuvre pour différentes zones de recherche (Z1-Z2), une dite position de la fibre optique (POS_FBR) étant déterminée (S200) en fonction d'au moins un niveau de détection (DET_LVL) obtenu pour au moins une position de la source (POS_SRC) comprise dans une dite zone de recherche (Z1-Z2).

4. Procédé selon l'une quelconque des revendications 1 à 3, comprenant :
- fournir (S300) une carte (MAP) représentative d'au moins une position déterminée de la fibre optique (POS_FBR).

5. Procédé selon la revendication 4, dans lequel la fourniture de la carte (S300) comprend au moins une étape parmi les suivantes :
- interpoler des positions déterminées de la fibre optique (POS_FBR) ; et
- régresser des positions déterminées de la fibre optique (POS_FBR).

6. Procédé selon l'une quelconque des revendications 1 à 5, dans lequel un dit niveau de détection de la source (DET_LVL) est déterminé en utilisant au moins un réseau de neurones.

7. Procédé selon l'une quelconque des revendications 1 à 6, dans lequel ladite au moins une détermination (S200) d'une position de la fibre optique (POS_FBR) est mise en oeuvre par un dispositif de localisation (APP) et comprend :
- envoyer (S220) à la source (SRC) une instruction de génération de vibrations et/ou de chaleur (CMD_SRC) ; et/ou
- envoyer (S220) au dispositif de détection (DXS) une instruction de mesure d'un niveau de détection (CMD_DXS).

8. Dispositif (APP) de localisation d'une fibre optique (FBR) enfouie dans un volume, le dispositif (APP) comprenant un localisateur de fibre optique configuré pour déterminer (S200) au moins une position de la fibre optique (POS_FBR) en fonction d'au moins un niveau de détection (DET_LVL) d'une source de rayonnement (SRC) pour au moins une position de la source (POS_SRC) fourni par un dispositif de détection (DXS) connecté à la fibre optique (FBR),
et dans lequel une détermination (S200) d'une position de la fibre optique (POS_FBR) comprend :
obtenir (S250) une profondeur de la fibre optique (DPT) par rapport à une surface du volume,
cette profondeur (DPT) étant déterminée en fonction d'un dit niveau de détection (DET_LVL).

9. Dispositif (APP) selon la revendication 8, **caractérisé en ce que** le dispositif de localisation (APP) est un dispositif parmi : un terminal utilisateur, et un dispositif dit de réalité augmentée.

10. Dispositif (APP) selon la revendication 9, **caractérisé en ce que** le dispositif de réalité augmentée (APP) comporte un indicateur configuré pour indiquer à un utilisateur (USR) une position de la source (POS_SRC).

11. Dispositif (APP) selon l'une quelconque des revendications 8 à 10, dans lequel la source de rayonnement (SRC) est une source de vibration et/ou de chaleur.

12. Système (SYS) de localisation d'une fibre optique (FBR) enfouie dans un volume, le système (SYS) comprenant :
- un dispositif de détection (DXS) destiné à être connecté à la fibre optique (FBR) et configuré pour fournir au moins un niveau de détection (DET_LVL) d'une source de rayonnement (SRC); et
- un localisateur de fibre optique configuré pour déterminer (S200) au moins une position de la fibre optique (POS_FBR) en fonction dudit au moins un niveau de détection (DET_LVL)
et dans lequel une détermination (S200) d'une position de la fibre optique (POS_FBR) comprend :
obtenir (S250) une profondeur de la fibre optique (DPT) par rapport à une surface du volume,
cette profondeur (DPT) étant déterminée en fonction d'un dit niveau de détection (DET_LVL).

13. Système (SYS) selon la revendication 12, comprenant la source de rayonnement (SRC), la source (SRC) étant contrôlée par un dispositif de localisation (APP) comprenant le localisateur de fibre optique.

14. Programme d'ordinateur (PROG) comprenant des instructions pour mettre en oeuvre les étapes d'un procédé selon l'une des revendications 1 à 7, lorsque le programme d'ordinateur (PROG) est exécuté par au moins un processeur (PROC).
